# FASCICULE DE BREVET EUROPEEN

(11) **EP 0 629 444 B1**
(45) Date de publication et mention de la délivrance du brevet: **04.03.1998**
(21) Numéro de dépôt: 94401335.8
(22) Date de dépôt: 14.06.1994
(51) Int. Cl.: B01J 47/02, C02F 1/42

(54) **Dispositif de répartition et de distribution de liquide au sein d'une unité de traitement d'eau**
Flüssigkeitsverteilung und Abgabevorrichtung in einer Wasserbehandlungseinheit
Liquid repartition and distribution device within a water treatment unit

(30) Priorité: 15.06.1993 FR 9307203
(43) Date de publication de la demande: 21.12.1994
(73) Titulaire: BWT FRANCE, F-92504 Rueil-Malmaison (FR)
(72) Inventeur: Arribard, Jean-Michel, F-92500 Rueil Malmaison (FR); Joubert, Dominique, F-78015 Paris (FR); Pecolatto, Michel, F-95500 Gonesse (FR); Sabatier, Martial, F-92140 Clamart (FR); Tharreau, Véronique, F-75003 Paris (FR)
(74) Mandataire: Armengaud Ainé, Alain

(56) Documents cités:
- US-A- 1 626 055
- US-A- 3 662 780
- US-A- 3 704 785

## Description

L'invention est relative à une unité de traitement de fluide gazeux ou liquide, telle que notamment une unité d'échange d'ions, comme par exemple les adoucisseurs. Cette unité vise à réduire la dureté excessive (ou de titre hydrotimétrique élevé) des eaux couramment distribuées pour des usages domestiques, alimentaires, industriels.

Lors du traitement par adoucissement, une eau claire ou clarifiée chemine au travers et au contact d'une résine régénérable de type cationique ; au cours de son passage, les ions, notamment calcium et magnésium dissous dans l'eau, sont échangés contre les ions sodium de la résine. Ainsi, en sortie de l'adoucisseur, la minéralisation sodique s'est substituée à la minéralisation calcique et magnésienne. Par contre, cette opération ne modifie pas la teneur en anions de l'eau (sulfates, chlorures,..).

La régénération des résines est réalisée à l'aide d'une saumure (solution très concentrée en chlorure de sodium). Les ions sodium de cette saumure, présents en grande quantité, chassent les ions calcium et magnésium fixés sur la résine et permettent à celle-ci de recouvrer sa forme sodique.

Les unités d'échanges d'ions classiques utilisent des résines de caractéristiques bien déterminées ; ainsi, en fonction d'un volume d'eau à adoucir, il est possible de dimensionner un adoucisseur en calculant le volume de résine nécessaire à incorporer dans l'appareil.

Ces unités sont donc souvent de volume important, limitant de ce fait leur intégration au plus proche de leur site d'exploitation, cet inconvénient devient très sensible dans le cas d'une utilisation domestique.

Ainsi, de nouvelles résines ont fait l'objet d'études en vue de leur application dans le domaine du traitement des eaux. Bien que leurs propriétés soient particulièrement intéressantes, les contraintes hydrauliques liées à leur utilisation sont assez strictes et nécessitent des modifications considérables dans la conception et la réalisation des appareils.

La présente invention se propose de pallier à ces inconvénients en offrant un dispositif de distribution compatible avec des adoucisseurs de volume restreint, ces derniers étant remplis de résine à rendement d'échange élevé.

Ainsi, ces résines ont donc nécessité la mise au point de dispositifs de répartition et de distribution des différents flux en phase d'exploitation courante et en phase de régénération. Ce dispositif doit permettre d'une part, le passage au sein de la résine ou de n'importe quel matériau filtrant, d'un liquide à traiter, l'écoulement devant s'effectuer selon une direction préférentielle et selon une vitesse donnée afin de respecter les prescriptions d'utilisation de la résine telles que notamment le temps de contact nécessaire à la réaction d'échange d'ions et d'autre part, autoriser le mouvement, au travers de ce même matériau filtrant, également dans un sens favorable et à une vitesse donnée, d'un fluide de régénération tel que notamment une saumure.

A cet effet, le dispositif de répartition et de distribution de liquide, objet de l'invention, au sein d'une unité de traitement d'eau contenant un matériau filtrant, se caractérise en ce qu'il comprend notamment un plateau, séparant l'unité de traitement en une zone amont contenant le matériau filtrant et une zone aval, pourvu d'au moins deux parties distinctes conformant des réseaux de distribution, l'une d'entre elles, étant percée d'une pluralité d'orifices qui permettent le passage du fluide traité ayant traversé le matériau filtrant entre la zone amont et la zone aval qui communiquent, par l'intermédiaire d'un orifice de distribution obturable en fonction du sens d'écoulement du fluide, ledit orifice étant disposé en regard de la zone aval dans la partie basse de la partie centrale du plateau, avec la deuxième partie dudit plateau et le réseau d'évacuation du fluide traité, la partie complémentaire étant munie en outre, sur l'une des faces du plateau, d'une pluralité d'ouvertures qui permettent un écoulement du fluide régénérant au sein dudit matériau filtrant lors de la phase de régénération, ledit fluide régénérant étant introduit par le réseau de soutirage du fluide traité.

D'autres caractéristiques et avantages de la présente invention ressortiront de la description faite ci-après, en référence aux dessins annexés qui en illustrent un exemple de réalisation dépourvu de tout caractère limitatif. Sur les figures :

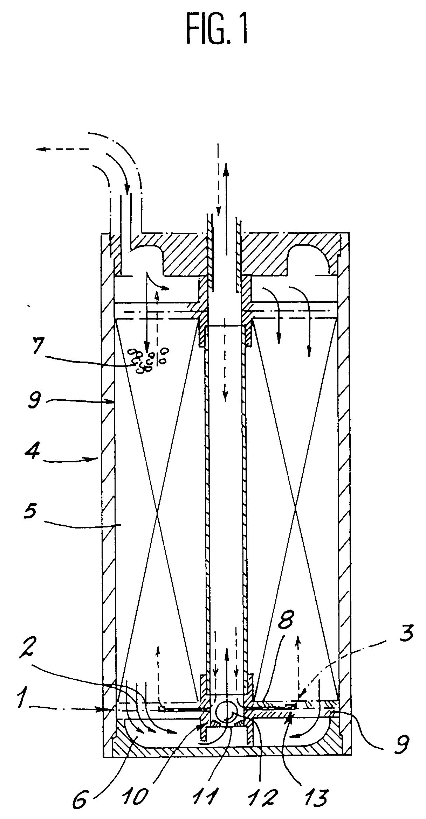

- la figure 1 est une vue plane en coupe d'un adoucisseur muni du dispositif de répartition ;

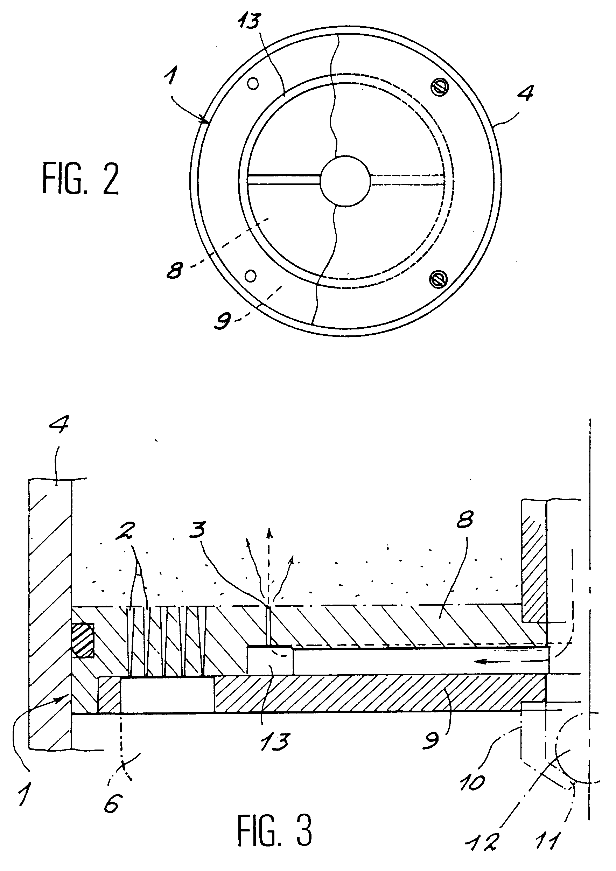

- la figure 2 est une vue plane en élévation frontale d'un dispositif de répartition ;
- la figure 3 est une demi-vue en coupe, en élévation plane d'un dispositif de répartition.

Selon un mode préféré de réalisation d'un dispositif de distribution et de répartition d'un fluide régénérant ou d'un fluide de consommation, il comprend un plateau 1 alvéolaire, dont la répartition des cavités 2 et des orifices 3 détermine des réseaux de distribution distincte. Ce plateau est positionné dans l'unité 4 de traitement, indifféremment en position haute ou basse de cette dernière, il s'étend parallèlement par rapport à l'une des extrémités de l'enceinte 4 de traitement et il permet de délimiter l'enceinte en une zone amont 5 contenant le matériau filtrant 7, notamment de la résine et une zone aval 6 en communication avec le réseau de soutirage en phase de service.

Ainsi, la plus grande partie du plateau est occupée par une pluralité d'orifices 3 qui permettent le passage d'un fluide, généralement le fluide venant d'être traité, de la zone amont 5 à la zone aval 6. La répartition de ces orifices sur le plateau 1 est préférentiellement annulaire et périphérique, le diamètre et le nombre de ces trous sont fonction des caractéristiques hydrauliques de la résine.

La partie 8 complémentaire du plateau, généralement la partie centrale 10, ne communique pas avec la partie 9 périphérique mais est en relation avec le réseau de soutirage ou d'évacuation du fluide traité, ces deux régions conforment deux réseaux de distribution et de répartition de fluide distincts.

Selon un autre mode de réalisation d'un dispositif selon l'invention, le plateau 1 comporte deux disques de faible épaisseur, emboîtés ou éventuellement reliés sur leur périphérie par un flanc déterminant ainsi dans l'épaisseur du plateau, des chambres creuses. De même, ce plateau 1 est traversé axialement par une pluralité de trous qui mettent en relation la zone amont et la zone aval.

Quel que soit le mode de réalisation du plateau, la zone centrale 10 est pourvue, dans sa partie basse et en regard de la zone aval 6, d'au moins un orifice de distribution obturable 11 par un corps 12 tel que notamment une bille, un pointeau, une lame, formant clapet. La position de ce corps 12 par rapport au siège de l'orifice 11 est déterminée en fonction de l'utilisation de l'appareil et selon le sens de circulation du fluide. En phase de service, le siège de l'organe de distribution est passant, il n'est pas obturé, mettant en communication le fluide traité avec le réseau de soutirage tandis qu'en phase de régénération, le siège est obturé et le fluide de régénération est distribué vers les orifices 3 devant assurer la diffusion de la saumure au travers de la résine 7.

A l'opposé de cet orifice obturable 11, sur la face en contact de la zone amont et du matériau filtrant 7, on dispose dans l'un des disques du plateau, notamment le disque complémentaire 8 et autour du canal de soutirage et d'évacuation du fluide, une pluralité d'orifices 3 de diamètre différent de ceux 2 placés dans la partie périphérique du plateau, ces trous 3 pouvant être reliés entre eux par des saignées 13 concentriques et/ou radiales, délimitant de ce fait, un réseau maillé apte à diffuser uniformément le fluide de régénération.

Dans une phase d'utilisation de soutirage d'un fluide de consommation, le fluide chemine à l'intérieur de la zone amont 5 et donc à travers de la couche filtrante 7, il parvient dans la zone aval 6 grâce à la pluralité d'orifices 2 périphériques du plateau, puis parvenu devant l'orifice 11 pourvu de son clapet 12, dans son sens passant, le fluide débouche dans la zone centrale 10 du plateau 1 qui est reliée au niveau notamment du disque supérieur au canal d'évacuation et de soutirage.

En phase de régénération, le fluide régénérant (saumure) est introduit dans l'unité de traitement 4 à contre-courant par l'intermédiaire du canal d'évacuation si le dispositif est placé en partie basse, mais cette circulation devient à co-courant si ce dernier est positionné en partie haute.

Ainsi dans un mode, par exemple, de circulation à contre-courant, il aboutit directement dans la cavité interne de la zone centrale 10 du plateau 1, mais ne peut pas franchir l'un des disques du plateau, car dans ce sens de circulation, le corps formant clapet 12 est plaqué sur le siège de l'orifice 11. Le fluide régénérant est donc refoulé au travers des orifices 3 du réseau complémentaire du plateau et réparti sur l'ensemble du maillage, afin de diffuser la solution riche en chlorure de sodium au sein de la couche filtrante 7 saturée, notamment la résine.

Selon un autre mode de réalisation, l'une quelconque des parties du plateau, peut être remplacée par une membrane dont les caractéristiques de résistance à l'écoulement sont fonction du sens de passage du fluide qui la traverse. Ainsi, un plateau selon l'invention sera constitué par un assemblage concentrique d'une pluralité d'anneaux et de disques, orientés suivant leur position sur le plateau dans un sens passant ou résistant par rapport à la direction du fluide de traitement ou de régénération.

Selon un autre mode de réalisation, les orifices 3 de diffusion de la saumure au travers de la résine sont remplacés des crépinettes ou par un réseau de canaux en étoile.

La présente invention telle qu'elle vient d'être décrite, possède de très nombreux avantages et particulièrement elle permet la mise en oeuvre d'une résine à haut rendement, ce qui limite énormément les rejets à l'égout d'une solution régénérante, le ratio exprimé de la façon suivante : la quantité de saumure apportée par rapport à la quantité d'ions captés par la résine est très proche de 1 avec ces types de résine et de dispositif, au lieu de 1.7 à 2 pour les résines ordinaires. De plus, ce dispositif de répartition peut être intégré à l'intérieur d'un adoucisseur classique, pourvu de résine conventionnelle afin de faire tendre ledit ratio vers 1.

Il demeure bien entendu que la présente invention n'est pas limitée aux exemples de réalisation décrits et représentés ci-dessus, mais qu'elle en englobe toutes les variantes comprises dans l'invention telle que définie dans les revendications.

## Revendications

1. Dispositif de répartition et de distribution de liquide, au sein d'une unité de traitement d'eau contenant un matériau filtrant, caractérisé en ce qu'il comprend notamment un plateau (1), séparant l'unité de traitement en une zone amont (5) contenant le matériau filtrant (7) et une zone aval (6), pourvu d'au moins deux parties distinctes conformant des réseaux de distribution, l'une d'entre elles, étant percée d'une pluralité d'orifices (2) qui permettent le passage du fluide traité ayant traversé le matériau filtrant (7) entre la zone amont (5) et la zone aval (6) qui communiquent, par l'intermédiaire d'un orifice (11) de distribution obturable en fonction du sens d'écoulement du fluide, ledit orifice étant disposé en regard de la zone aval (6) dans la partie basse de la partie centrale (10) du plateau (1), avec la deuxième partie dudit plateau et le réseau d'évacuation du fluide traité, la partie complémentaire (8) étant munie en outre, sur l'une des faces du plateau (1), d'une pluralité d'ouvertures (3) qui permettent un écoulement du fluide régénérant au sein dudit matériau filtrant lors de la phase de régénération, ledit fluide régénérant étant introduit par le réseau de soutirage du fluide traité.

2. Dispositif de répartition selon la revendication 1, caractérisé en ce que la répartition sur le plateau (1) des orifices (2, 3), disposés entre la zone amont (5) et la zone aval (6), est annulaire et périphérique, le diamètre et le nombre de ces orifices étant fonction des caractéristiques hydrauliques du matériau filtrant.

3. Dispositif de répartition selon la revendication 1 ou 2, caractérisé en ce que la partie complémentaire (8) du plateau (1) - la partie centrale (10) - est étanche par rapport à la partie périphérique (9), ladite partie (8) étant en communication avec le réseau de soutirage ou d'évacuation du fluide traité.

4. Dispositif de répartition selon l'une quelconque des revendications précédentes, caractérisé en ce que le plateau (1) est placé en partie haute de l'enceinte de traitement (4).

5. Dispositif de répartition selon l'une quelconque des revendications précédentes, caractérisé en ce que le plateau (1) est placé en partie basse de l'enceinte de traitement (4).

6. Dispositif de répartition selon l'une quelconque des revendications précédentes, caractérisé en ce que l'orifice de distribution obturable (11) comporte un corps (12) tel que notamment une bille, un pointeau, une lame, formant clapet, la position de ce corps (12) par rapport au siège de l'orifice étant déterminée en fonction de l'utilisation de l'appareil et selon le sens de circulation du fluide.

7. Dispositif de répartition selon l'une quelconque des revendications précédentes, caractérisé en ce qu'on dispose dans l'un des disques du plateau (1), notamment le disque supérieur, et autour du canal de soutirage du fluide, une pluralité d'orifices (3) de diamètre différent de ceux (2) placés dans la partie périphérique (9) du plateau (1).

8. Dispositif de répartition selon l'une quelconque des revendications précédentes, caractérisé en ce que les orifices (3) sont reliés entre eux par des saignées (13) concentriques et/ou radiales, délimitant de ce fait, un réseau maillé apte à diffuser uniformément le fluide de régénération.

9. Dispositif de répartition selon l'une quelconque des revendications précédentes, caractérisé en ce que les orifices (2, 3) de diffusion de la saumure au travers de la résine sont remplacés par des crépinettes ou par un réseau de canaux en étoile.

10. Dispositif de répartition selon l'une quelconque des revendications précédentes, caractérisé en ce qu'il autorise une circulation à contre-courant ou à co-courant du fluide régénérant.

## Claims

1. Distribution and supply device for liquid, within a treatment unit for water containing a filtering material, characterized in that it comprises, notably, a plate (1) separating the treatment unit into an upstream zone (5) containing the filtering material (7) and a downstream zone (6), provided with at least two distinct parts forming distribution networks, one of them is perforated by a plurality of orifices (2) which permit the passage of the created fluid that has passed through the filtering material (7) between the upstream zone (5) and the downstream zone (6), which communicate, by means of a supply orifice (11) which can be obturated as a function of the direction of flow of the fluid, with the second part of said plate and the discharge network for the treated fluid, the complementary part (8) being provided, in addition, on one of the faces of the plate (1), with a plurality of openings (3) which permit a flow of the regenerating fluid within said filtering material during the regeneration phase, said regenerating fluid being introduced via the draw-off network for the treated fluid.

2. Distribution device according to claim 1, characterized in that the distribution, over the plate (1), of the orifices (2, 3) disposed between the upstream zone (5) and the down-stream zone (6) is annular and peripheral, the diameter and number of these orifices being a function of the hydraulic characteristics of the filtering material.

3. Distribution device according to claim 1 or 2. characterized in that the complementary part (8) of the plate (1), the central part (10), is sealed from the peripheral part (9), said part (8) being in communication with the drain-off or discharge network for the treated fluid.

4. Distribution device according to any one of the preceding claims, characterized in that the plate (1) is situated at the upper part of the treatment enclosure (4).

5. Distribution device according to any one of the preceding claims, characterized in that the place (1) is situated in the lower part of the treatment enclosure (4).

6. Distribution device according to any one of the preceding claims, characterized in that the obturatable distribution orifice (11) has a body (12) such as, notably, a ball, needle or a blade, forming a valve, the position of this body (12) relative to the seating of the orifice being determined according to the use of the apparatus.

7. Distribution device according to any one of the preceding claims, characterized in that there are disposed, in one of the discs of the plate (1), notably the upper disc, and around the draw-off duct for the fluid, a plurality of orifices (3) of a diameter different from those (2) placed in the peripheral part (9) of the plate (1).

8. Distribution device according to any one of the preceding claims, characterized in that the orifices (3) are connected to one another by concentric and/or radial grooves (13), in this way defining a grid network adapted for uniformly diffusing the regeneration fluid.

9. Distribution device according to any one of the preceding claims, characterized in that the orifices (2, 3) for diffusing the brine through the resin are replaced by strainers or by a star-shaped network of channels.

10. Distribution device according to any one of the preceding claims, characterized in that it allows a counter-flow or parallel-flow circulation of the regenerating fluid.

## Patentansprüche

1. Vorrichtung zur Flüssigkeitsverteilung und -steuerung in einer ein Filtermaterial enthaltenden Wasserbehandlungsanlage, **dadurch gekennzeichnet, daß** sie insbesondere einen Boden (1) umfaßt, der die Wasserbehandlungsanlage in eine das Filtermaterial (7) enthaltende obere Zone (5) und eine untere Zone (6) trennt und mit wenigstens zwei unterschiedlichen, Verteilungsnetze bildenden Teilen versehen ist, wobei einer davon mit zahlreichen Öffnungen (2, 3) durchbohrt ist, die den Durchgang des behandelten Fluids, welches das Filtermaterial (7) durchströmt hat, zwischen der oberen (5) und der unteren Zone (6) erlauben und die über eine in Abhängigkeit von der Strömungsrichtung des Fluids verschließbare Steueröffnung (11), die bezüglich der unteren Zone (6) im unteren Abschnitt des zentralen Teils (10) des Bodens (1) angeordnet ist, mit dem zweiten Teil des Bodens und dem Abflußnetz des behandelten Fluids in Verbindung stehen, wobei der ergänzende Teil (8) außerdem auf einer der Seiten des Bodens mit zahlreichen Öffnungen (2, 3) ausgestattet ist, die während der Regenerationsphase ein Strömen des Regenerierfluids, welches durch das Abflußnetz des behandelten Fluids zugeführt wird, durch das Filtermaterial ermöglichen.

2. Verteilvorrichtung nach Anspruch 1, **dadurch gekennzeichnet, daß** die Verteilung der zwischen der oberen (5) und der unteren Zone (6) auf dem Boden (1) angeordneten Öffnungen (2, 3) ringförmig und umfangsmäßig ist und Durchmesser und Anzahl dieser Öffnungen von den hydraulischen Eigenschaften des Filtermaterials abhängen.

3. Verteilvorrichtung nach Anspruch 1 oder 2, **dadurch gekennzeichnet, daß** der ergänzende Teil des Bodens (1) - der zentrale Teil (10) - in bezug auf den Umfangsteil (9) dicht ist, wobei dieser Teil (8) mit dem Abfluß- oder Entnahmenetz für das behandelte Fluid in Verbindung steht.

4. Verteilvorrichtung nach einem der vorhergehenden Ansprüche, **dadurch gekennzeichnet, daß** sich der Boden (1) im oberen Teil des Behandlungsbehälters (4) befindet.

5. Verteilvorrichtung nach einem der vorhergehenden Ansprüche, **dadurch gekennzeichnet, daß** sich der Boden (1) im unteren Teil des Behandlungsbehälters (4) befindet.

6. Verteilvorrichtung nach einem der vorhergehenden Ansprüche, **dadurch gekennzeichnet, daß** die verschließbare Steueröffnung (11) einen ein Ventil bildenden Körper (12), wie insbesondere eine Kugel, eine Nadel oder einen Keil aufweist, wobei die Position dieses Körpers (12) in bezug auf den Sitz der Öffnung in Abhängigkeit vom Betrieb der Anlage und entsprechend der Fluidzirkulation bestimmt ist.

7. Verteilvorrichtung nach einem der vorhergehenden Ansprüche, **dadurch gekennzeichnet, daß** in einer der Scheiben des Bodens (1), insbesondere der oberen Scheibe, um das Abflußrohr des Fluids zahlreiche Öffnungen (3) angeordnet sind, deren Durchmesser von dem der im Umfangsteil (9) des Bodens (1) befindlichen Öffnungen (2) verschieden sind.

8. Verteilvorrichtung nach einem der vorhergehenden Ansprüche, **dadurch gekennzeichnet, daß** die Öffnungen (3) durch konzentrische und/oder radiale Einschnitte (13) untereinander verbunden sind, wodurch ein Maschennetz gebildet wird, welches das Regenerierfluid gleichmäßig verteilen kann.

9. Verteilvorrichtung nach einem der vorhergehenden Ansprüche, **dadurch gekennzeichnet, daß** die Öffnungen (2, 3) für die Verteilung der Salzlösung durch das Harz durch Filtersiebe oder ein Netz aus sternförmigen Kanälen ersetzt werden.

10. Verteilvorrichtung nach einem der vorhergehenden Ansprüche, **dadurch gekennzeichnet, daß** mit ihr eine Zirkulation des Regenerierfluids im Gegen- oder Gleichstrom möglich ist.
